# EUROPEAN PATENT APPLICATION

(11) **EP 2 172 838 A1**
(43) Date of publication of application: **07.04.2010**
(21) Application number: 09171037.6
(22) Date of filing: 23.09.2009
(51) Int. Cl.: G06F 9/44, G05B 19/042, G06F 3/048

(54) **EDD information and dialog menu display in a WINDOWS standard multi windows environment conforming to the e-EDD standard**

(30) Priority: 24.09.2008 JP 2008244188
(71) Applicant: Yokogawa Electric Corporation, Tokyo 180-8750 (JP)
(72) Inventor: Kanokogi, Hiroaki, Musashino-shi Tokyo 180-8750 (JP)
(74) Representative: Grünecker, Kinkeldey, Stockmair & Schwanhäusser Anwaltssozietät

(57) **Abstract**

A device information display apparatus for displaying multiple pieces of device information respectively obtained from field devices through communication therewith on a display unit based on the Enhanced EDD standard is structured such that it includes: a multi document generating unit for generating multiple pieces of device information including a dialog menu on WINDOWS (registered trade mark) standard child windows; and, a display information queuing unit for queuing the thus generated child windows therein and also for delivering such child windows to the display unit.

## Description

### CROSS-REFERENCE TO RELATED APPLICATIONS

This application is based on and claims priority under 35 U.S.C. §119 from Japanese Patent Application No. 2008-244188 filed on September 24, 2008.

### BACKGROUND OF THE INVENTION

### Technical Field

The present invention relates to a device information display apparatus structured such that it communicates with field bus devices corresponding to the Foundation Fieldbus (FF-H1), HART, Profibus and the like supporting the Enhanced EDD (which is hereinafter referred to as the e-EDD standard) which includes the Enhanced EDD (Enhanced Electric Device Description, IEC61804-1, -2 and -3) and a user interface guide line (IEC61804-4) to thereby obtain multiple pieces of field device information; and, it displays the thus obtained multiple pieces of field device information using a display control program based on the e-EDD standard.

### Related Art

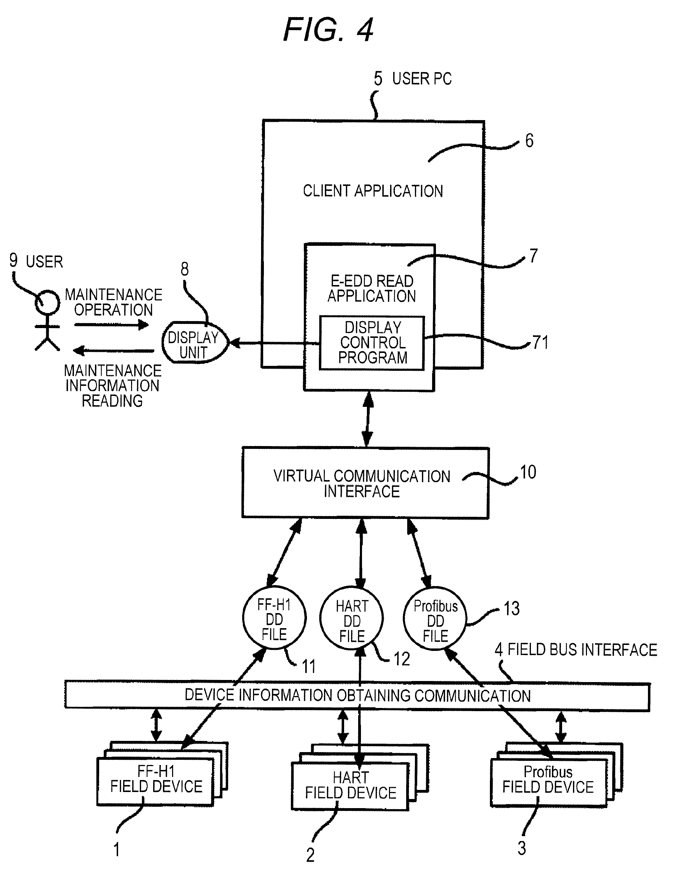

Fig. 4 is a function block diagram of an example of the structure of a device information display apparatus based on the e-EDD standard. When setting/adjusting and maintaining field devices, a user obtains device information that is displayed through the device information display apparatus.

An FF-H1 field device 1, a HART field device 2 and a Profibus device 3 are allowed to communicate with a user PC (computer) 5 through a field bus interface 4. In a client application 6 loaded in the user PC 5, there is loaded an e-EDD read application 7 for realizing the function of a device information display apparatus according to the invention.

The field device information is displayed on a display unit 8 through a display control program 71 contained in the e-EDD read application 7. A user 9 obtains maintenance information and the like from such display information and executes a necessary operation.

The e-EDD read application 7 obtains multiple pieces of device information based on the e-EDD standard respectively from the FF-H1 field device 1, HART field device 2 and Profibus device 3 through a virtual communication interface 10.

An FF-H1 DD file 11, a HART DD file 12 and a Profibus DD file 13 respectively collect and hold multiple pieces of device information based on the e-EDD standard from their associated FF-H1 field device 1, HART field device 2 and Profibus device 3. And, the virtual communication interface 10 accesses these DD files to obtain the device information therefrom. In these DD (Device Description) files, there are stated the data that are owned by the respective field devices and the specifications that are used to access such data.

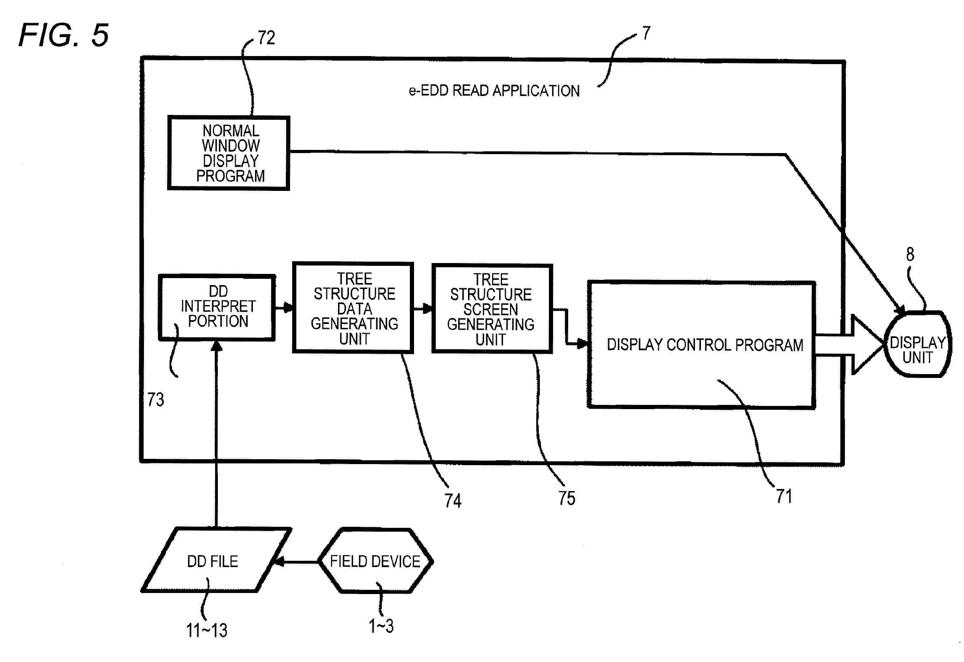

Fig. 5 is a function block diagram of an example of the structure of an e-EDD read application 7 contained in a device information display apparatus according to the prior art. The e-EDD read application 7 includes a display control program 71 for allowing a display unit 8 to display DD file information based on the e-EDD standard and a normal window display program 72 for allowing the display unit 8 to display a normal window menu not based on the standard.

The data of the DD files 11∼13, which respectively hold information obtained from the field devices 1 - 3, are processed by a DD interpret portion 73, are tree-structured by a tree structure data generating program 74, are converted to tree screen data by a tree structure screen generating program 75, and are then delivered to a display control program 71.

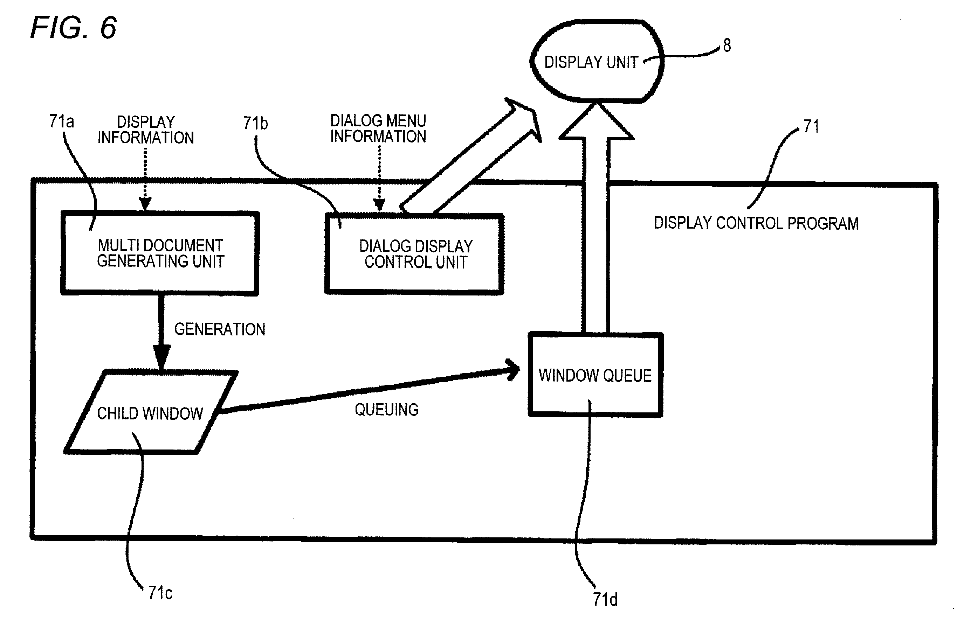

Fig. 6 is a function block diagram of an example of the structure of the display control program 71 included in the e-EDD read application 7 employed in the conventional device information display apparatus. The display control program 71 includes a multi documents generating unit 71a for obtaining other display information than dialog menu information, and a dialog display control unit 71b for obtaining only the dialog menu information.

The multi documents generating unit 71a obtains a piece of other DD file information than the dialog menu information to generate a child window 71c. The thus generated child window 71c is queued in a window queue 71d, which is then delivered to and displayed on a display unit 8.

The dialog display control unit 71b obtains only the dialog menu information and allows the display unit 8 to display it on the maximum screen; and also, it forcibly closes other window menus already opened to prohibit operations from other windows than the dialog menu.

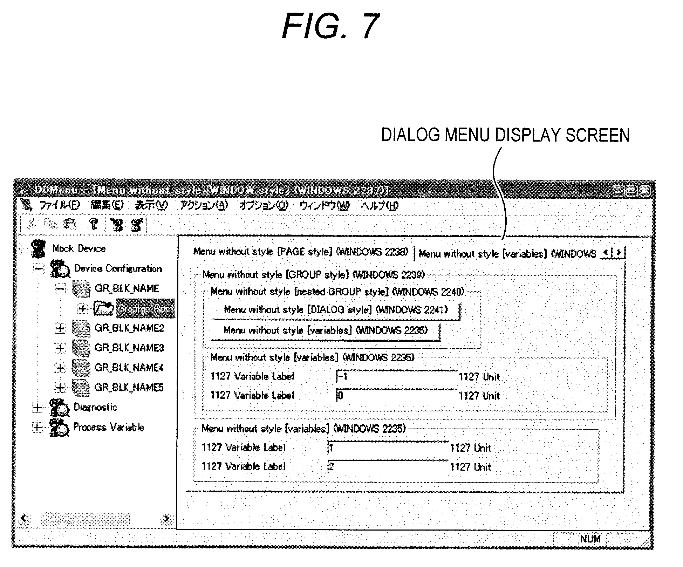

Fig. 7 is an example of a dialog menu display screen according to the conventional display control program 71. On the screen, only the dialog menu is displayed in the maximum size and other child windows are forcibly closed. And thus, there is not provided the environment of normal multi windows in which the dialog menu is operated while confirming the display contents of other windows. Here, in "Integrated device management software package PRM" stated in "Measuring Technology" (p. 35 to 39) published in July, 2006, by Japan Industrial Publishing Co., Ltd., there is disclosed an integrated device management software package which uses such display control program 71.

The structure of the conventional device information display apparatus based on the e-EDD standard raises the following problems.
That is, (1): One page (according to the IEC standard, this is defined as a menu) is to be displayed for one e-EDD read application. Therefore, to display multiple pieces of DD file information, it is necessary to actuate multiple e-EDD read applications; however, it is complicated for an end user to manage the multiple applications simultaneously, resulting in the poor operation efficiency.

(2) : Further, in the specifications of the e-EDD standard, there exists a dialog menu which must be displayed on one screen. According to the conventional multiple e-EDD read applications operating method, it is complicated to manage the dialog menu that must be handled specifically, or the management of the dialog menu provides the movement (system modality) that is contrary to the intuition of the end user.

### SUMMARY OF THE INVENTION

The present invention aims at solving the above problems and thus it is an object of the invention to realize a device information display apparatus which can display multiple pieces of device information including a dialog menu in a WINDOWS (registered trade mark) standard multi window environment while based on the e-EDD standard.

In attaining the above object, the invention has the following structure.
According to a first aspect of the invention, there is provided a device information display apparatus for displaying a device information obtained from field devices through communication therewith on a display unit in conformity with the Enhanced EDD standard, including:
a multi document generating unit that generates a display information including a dialogue menu on a WINDOWS (registered trade mark) standard child window; and
a display information queuing unit that queues the generated child window and delivers the same to the display unit.

According to a second aspect of the invention, there is provided the device information display apparatus as set forth in the first aspect, further including:
a focus control unit that, when the queued child window is a dialog menu, initializes and maximizes the dialog menu to display the same on the most front screen of the display unit and, at the same time, closes the other child windows than the queued child window or nullifies operations on the other child windows.

According to a third aspect of the invention, there is provided the device information display apparatus as set forth in the second aspect, wherein
the focus control unit has, as property thereof, a function to give a user a choice between closing the other child windows and nullifying operations on the other child windows.

According to a fourth aspect of the invention, there is provided the device information display apparatus as set forth in the second or third aspect, wherein
the focus control unit has a function to allow a user to change freely screen size of a dialog menu to be displayed.

According to a fifth aspect of the invention, there is provided the device information display apparatus as set forth in the third or forth aspect, wherein
the focus control unit has a function which, when a dialog menu is displayed, urges a user to close the other child windows which are already opened, and which, when the user makes a choice for not closing the other child windows, closes the displayed dialog menu.

According to a sixth aspect of the invention, there is provided the device information display apparatus as set forth in any one of the second to fifth aspects, wherein
the focus control unit has a function which, when another dialog menu is opened from the displayed dialog menu, leaves the other displayed child windows as they are.

According to a seventh aspect of the invention, there is provided the device information display apparatus as set forth in any one of the second to sixth aspects, wherein
the focus control unit has a function which, when a dialog menu is displayed, leaves child windows relating to display information not based on the standard as they are.

According to the structure of the invention, there can be expected the following effects.
That is: (1) According to the invention, while intuitively prohibiting operations which are prohibited by the e-EDD standard, display of field device information can be realized by a user interface of a WINDOWS (registered trade mark) standard multi window which is well known to users.

(2) Multiple information pages can be read simultaneously using a single read application. For example, the variables of devices can be changed while looking at the pictures of a chart. Therefore, the devices can be monitored and operated correspondingly to the most important user scenario.

(3) The present structure can be used even for a menu such as a dialog menu the edition of which is prohibited in multiple windows with the same operation feeling as other child windows (for example, the size of the menu can be enlarged and reduced; the contents of the menu can be arranged side by side; and, the menu contents can be displayed using icons.) Therefore, a specific education cost (which is inherent to the e-EDD standard) necessary to educate end users can be reduced.

### BRIEF DESCRIPTION OF THE DRAWINGS

Fig. 1 is a function block diagram of an exemplary embodiment of the structure of a display control program used in a device information display apparatus according to the invention.
Fig. 2 is a view of an example of a multi windows screen provided by a display control program according to the invention.
Fig. 3 is a view of an example of a display screen of a dialog menu provided by a display control program according to the invention.
Fig. 4 is a function block diagram of an example of the structure of a device information display apparatus based on the e-EDD standard.
Fig. 5 is a function block diagram of an example of the structure of an e-EDD read application used in a conventional device information display apparatus.
Fig. 6 is a function block diagram of an example of the structure of a display control program included in the e-EDD read application of a conventional device information display apparatus.
Fig. 7 is a view of an example of a dialog menu display screen according to a conventional display control program.

### DETAILED DESCRIPTION OF THE PREFERRED EMBODIMENTS

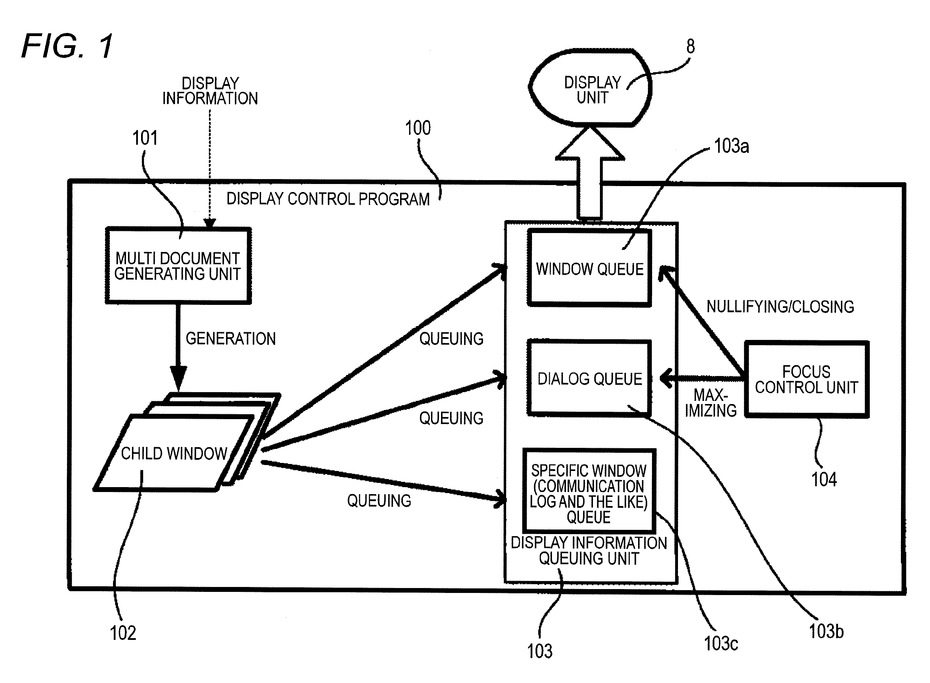

Now, description will be given below in detail of the invention with reference to the accompanying drawings. Fig. 1 is a function block diagram of an exemplary embodiment of the structure of a display control program employed in a device information display apparatus according to the invention, while the present display control program corresponds to the conventional display control program 71 discussed before with reference to Fig. 6.

The display control program 100 according to the invention is characterized by a structure which improves the function of the conventional display control program 71 discussed before with reference to Fig. 6 to realize a function to display field device information in a WINDOWS (registered trade mark) standard multi windows environment while based on the e-EDD standard.

In the display control program 100, a multi document generating unit 101 is structured by using a Multi Document Interface (MDI) manager function (which is a well-known technology) as the WINDOWS (registered trade mark) standard. The multi document generating unit 101 obtains multiple pieces of display information such as the DD file data, dialog menu and the specific window data (communication log) that are not based on the e-EDD standard, and generates child windows 102 from these pieces of display information.

The thus generated child windows 102 are queued into and held in a display information queuing unit 103 in the form of a window queue 103a, a dialog queue 103b and a specific window queue 103c. These queues are then delivered to a display unit 8 and are displayed thereon in the form of a WINDOWS (registered trade mark) standard multi windows.

Such multi windows environment makes it possible to provide a WINDOWS (registered trade mark) standard user interface which is well known to users and also through which the user can adjust a device while referring to multiple pages simultaneously, can rearrange multiple window menus and can execute other similar operations.

Here, for the principle of the standard that, when a dialog menu based on the e-EDD standard is being displayed, prohibits the operation of multiple windows, a focus control unit 104 is structured to have such function that allows the dialog menu and other menus than this to be operated seamlessly.

The focus control unit 104 has the following functions. That is: (1) When an queued child window is a dialog menu, the focus control unit 104 initializes and maximizes this dialog menu, and displays it on the most front screen of the display unit 8; and, at the same time, the focus control unit 104 closes other child windows or nullifies any operations on the child windows.

(2) The focus control unit 104 has a function as its property to give a user a choice between closing the other child windows and nullifying the operations on such child windows.

(3) The focus control unit 104 has a function to allow a user to change freely the screen size of a dialog menu displayed.

(4) The focus control unit 104 has a function which, when a dialog menu is displayed, urges a user to close other child windows already opened and, when the user chooses not closing the other child windows, closes the dialog menu displayed.

(5) The focus control unit 104 has a function which, when another dialog menu is opened from a dialog menu displayed, leaves the other child windows displayed as they are.

(6) The focus control unit 104 has a function which, when a dialog menu is displayed, leaves child windows relating to such pieces of display information not based on the above-mentioned standard as they are.

By providing the focus control unit 104 with these functions, the problem to be solved by the invention can be solved: that is, it is possible to realize a device information display apparatus which can display multiple pieces of display information including a dialog menu in a WINDOWS (registered trade mark) standard multi window environment while based on the e-EDD standard.

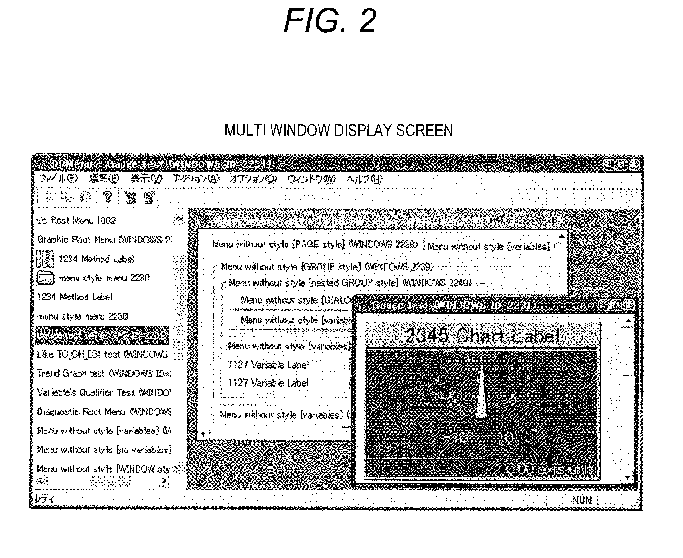

Fig. 2 shows an example of a multi windows display screen which is provided according to a display control program according to the invention. In Fig. 2, since no dialog menu is included, multiple menus are displayed in a normal multi windows environment.

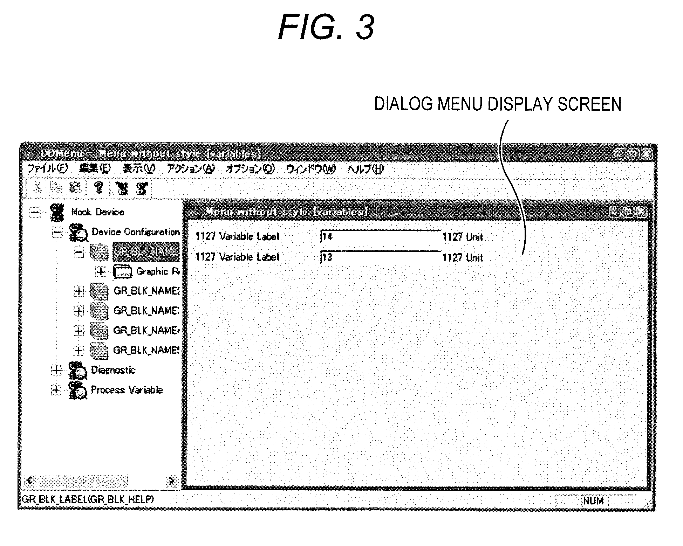

Fig. 3 shows an example of a dialog menu display screen in its initialized state employed in a display control program according to the invention. In Fig. 3, a dialog menu is maximized and displayed on the most front screen of the display unit 8. In this case, other child windows are closed or operations on such child windows are nullified by the function of the focus control unit 104.

In the exemplary embodiment described heretofore, there is illustrated a structure in which the invention is applied to a device information display apparatus based on the e-EDD standard. However, quite similar horizontal development is possible even in a device information display application based on the FDT/DTM that is an international standard ranking with the e-EDD standard, and the effect thereof is similar to that provided by the illustrated exemplary embodiment.

## Claims

1. A device information display apparatus for displaying a device information obtained from field devices through communication therewith on a display unit in conformity with the Enhanced EDD standard, comprising:
a multi document generating unit that generates a display information including a dialogue menu on a WINDOWS (registered trade mark) standard child window; and
a display information queuing unit that queues the generated child window and delivers the same to the display unit.

2. The device information display apparatus as set forth in claim 1, further comprising:
a focus control unit that, when the queued child window is a dialog menu, initializes and maximizes the dialog menu to display the same on the most front screen of the display unit and, at the same time, closes the other child windows than the queued child window or nullifies operations on the other child windows.

3. The device information display apparatus as set forth in claim 2, wherein
the focus control unit has, as property thereof, a function to give a user a choice between closing the other child windows and nullifying operations on the other child windows.

4. The device information display apparatus as set forth in claim 2 or 3, wherein the focus control unit has a function to allow a user to change freely screen size of a dialog menu to be displayed.

5. The device information display apparatus as set forth in claim 3 or 4, wherein
the focus control unit has a function which, when a dialog menu is displayed, urges a user to close the other child windows which are already opened, and which, when the user makes a choice for not closing the other child windows, closes the displayed dialog menu.

6. The device information display apparatus as set forth in any one of claims 2 to 5, wherein
the focus control unit has a function which, when another dialog menu is opened from the displayed dialog menu, leaves the other displayed child windows as they are.

7. The device information display apparatus as set forth in any one of claims 2 to 6, wherein
the focus control unit has a function which, when a dialog menu is displayed, leaves child windows relating to display information not based on the standard as they are.
